# FASCICULE DE BREVET EUROPEEN

(11) **EP 2 151 180 B1**
(45) Date de publication et mention de la délivrance du brevet: **25.07.2012**
(21) Numéro de dépôt: 09356050.6
(22) Date de dépôt: 31.07.2009
(51) Int. Cl.: A47J 43/046, A47J 43/07

(54) **Dispositif d'accouplement d'un bol et d'une base d'un appareil mixeur/batteur**
Kupplungsvorrichtung für eine Schüssel und einen Sockel eines Rühr- und Mixgeräts
Device for coupling a bowl and a base of a mixing/whisking device

(30) Priorité: 05.08.2008 BR MU8800469 U
(43) Date de publication de la demande: 10.02.2010
(73) Titulaire: SEB S.A., 69130 Ecully (FR)
(72) Inventeur: Veneziano, José Carlos, Vinhedo - SP - CEP 13280-000 (BR); Merlo, Angelo Wagner, Bairro-Campo Belo - SP - CEP-04619-000 (BR)
(74) Mandataire: Kiehl, Hubert

(56) Documents cités:
- CH-A- 363 448
- FR-A- 766 606
- US-B1- 6 340 124

## Description

La présente invention se rapporte à un dispositif de blocage et de déblocage d' un ensemble bol par rapport à une base pour un appareil mixeur/batteur. Le mécanisme de ce dispositif réagit à la pression d'un bouton, permettant de retirer l'ensemble bol de sa base.

La base du bol est équipée d'un bouton de blocage du bol sur sa base, avec une géométrie telle qu'une circonférence en forme de rainure prend place dans un logement au fond du bol, permettant le blocage de l'ensemble. Le bouton est maintenu en position de blocage par un ressort.

### Description de l'état de la technique

L'état de l'art révèle divers dispositifs sur des appareils tels que des mixeurs et des batteurs. Un tel dispositif est connu du document CH 363 448.

Habituellement, l'assemblage et le désassemblage entre l'ensemble bol et la base se fait au moyen de languettes et de protubérances formant des liaisons baïonnettes; l'ensemble bol tournant autour de son axe central et des glissières de blocage pour permettre l'emboîtement entre l'ensemble bol et la base du moteur.

Généralement, cet assemblage et ce désassemblage ne peut être réalisé que d'une seule façon entre l'ensemble bol et la base. Si les positions relatives entre le bol et la base ne sont pas correctes, il n'est pas possible d'effectuer l'assemblage. Ceci rend l'opération et la manipulation de l'appareil plus difficile pour l'utilisateur.

Un autre inconvénient, connu chez les mixeurs/ batteurs qui utilisent la technique actuelle, se rapporte au fait que les moyens de blocage destinés à la sécurité de l'utilisateur sont complexes et exigent divers composants, languettes, protubérances et moyens d'emboîtement et de déboîtement, qui peuvent casser, être mal réglés ou même s'user.

### Objectif de l'invention

Pour résoudre les inconvénients de la technique actuelle, cette invention présente un dispositif pour l'accouplement d'un bol et d'une base d'un récipient d'appareil mixeur, caractérisé en ce que le bol possède une extrémité inférieure comprenant un anneau circulaire surmonté d'une rainure dont le diamètre est plus petit que celui de l'anneau circulaire et en ce que la base comporte une paroi cylindrique dans laquelle vient s'engager l'anneau circulaire et un bouton comprenant une protubérance de blocage, le bouton étant mobile entre une position de repos, vers laquelle il est ramené par un ressort, dans laquelle la protubérance vient s'engager dans la rainure du bol lorsque le bol est accouplé à la base et une position enfoncée dans laquelle la protubérance est écartée de la rainure pour permettre le désaccouplement du bol.

Un des avantages de ce modèle est qu'il suffit d'appuyer sur le bouton du système pour libérer le bol du mixeur/batteur de sa base. L'opération est simple et rend plus facile l'utilisation de l'appareil.

Un autre avantage de ce modèle est la facilité avec laquelle on peut monter le bol sur sa base ; par simple pression du bol sur la protubérance de blocage du bouton qui s'écarte et qui revient en position de repos lorsque l'ensemble est bloqué.

En outre, la géométrie de l'ensemble permet le montage et le démontage du bol par rapport à la base, quelle que soit sa position. Il n'y a pas de position unique d'assemblage comme c'est souvent le cas pour beaucoup de systèmes de l'état de l'art.

Selon une autre caractéristique de l'invention, le bouton est monté pivotant autour d'un axe fixé sur la base du bol.

Il s'agit d'un système simple, facile à manoeuvrer, car il utilise un seul bouton et moyen de blocage pivotant, sans autre dispositif plus complexe.

Selon une autre caractéristique de l'invention, la paroi cylindrique se projette verticalement à partir d'un logement qui reçoit un support de lames.

Selon encore une autre caractéristique de l'invention, la paroi cylindrique supporte une languette de connexion se projetant horizontalement à l'opposé du bouton et configurant un siège entre le logement et la languette de connexion.

### Description des figures

L'objet de l'invention sera décrit avec plus de précision sur les figures en annexe, qui représentent un mode de réalisation particulier à titre d'exemple non limitatif :
La figure 1 est une vue en perspective de la base moteur du mixeur/batteur de ce modèle, accouplée au support des lames;
La figure 2 est une vue en perspective, avec une coupe transversale de la base du mixeur/batteur, accouplée au support des lames;
La figure 3 est une vue en perspective du support des lames du mixeur/batteur, sur lequel est monté le bouton pivotant de blocage et de déblocage du système;
La figure 4 est une vue en perspective du bouton de blocage entre le bol et la base, selon l'invention;
La figure 5 est une vue en perspective du bol de ce modèle.
La figure 6 est une coupe de face du bol accouplé et bloqué sur la base du moteur, selon l'invention.
La figure 7 est une vue en perspective du bol accouplé et bloqué sur la base du moteur, selon l'invention.

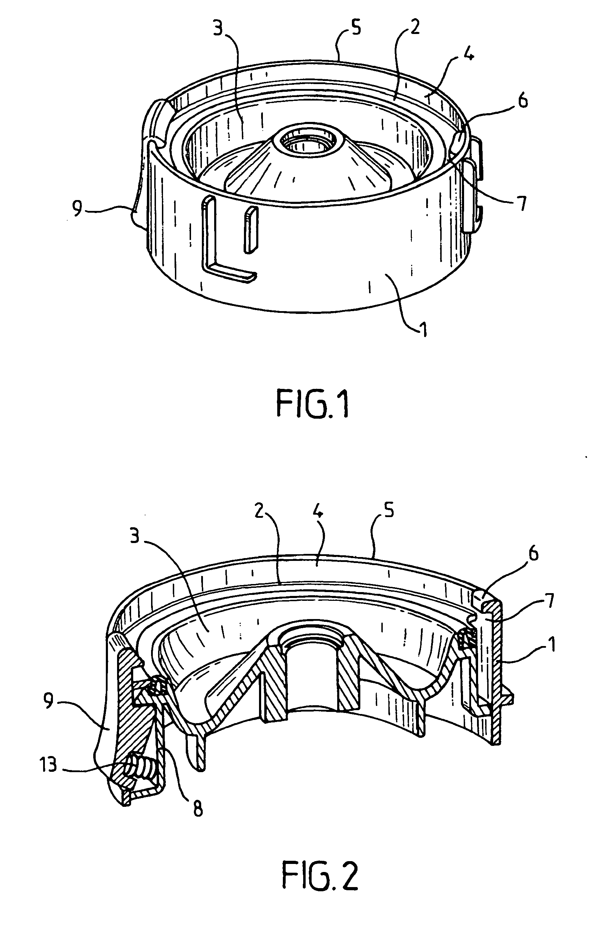

Sur la Figure 1, on peut observer que l'invention comprend une base(1), avec un logement (2) horizontal qui reçoit un support des lames (3), et une paroi cylindrique (4) qui se projette à la verticale à partir dudit logement (2).

À partir de l'arête supérieure (5) de la paroi (4) est projetée horizontalement une languette de connexion (6), dont le profil est parallélépipédique, formant ainsi un siège (7) entre ledit logement (2) et la languette (6).

On visualise mieux ce dispositif sur la Figure 2.

Diamétralement opposé à la languette (6), le support des lames (3) est muni d'une cavité rectangulaire (8), à l'intérieur de laquelle est fixé et pivote un bouton (9). Ladite cavité (8) possède deux sièges (10) sur lesquels vient reposer l'axe (11) du bouton(9).

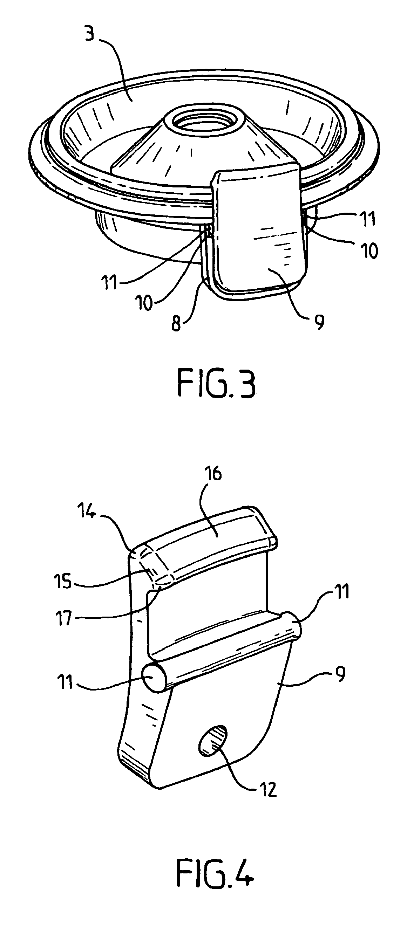

Le montage entre le support des lames (3) et le bouton (9) peut être visualisé sur la Figure 3.

En conformité avec la Figure 4, ledit bouton (9) pivote autour de son axe (11) et est muni sur sa partie inférieure d'un trou rond (12), qui reçoit un ressort en spirale (13), qui se monte entre ledit bouton (9) en venant s'appuyer sur la cavité (8) du support des lames (3), comme on peut le voir sur la figure 2.

L'extrémité supérieure (14) du bouton (9) possède une protubérance (15), à profil trapézoïdal, dont la face supérieure (16) inclinée dessine un coin. Sa face inférieure (17) est à la même hauteur que la languette de connexion (6) diamétralement opposée, par rapport au logement (2), configurant de la même façon un siège (7) entre ledit logement (2) et la protubérance (15).

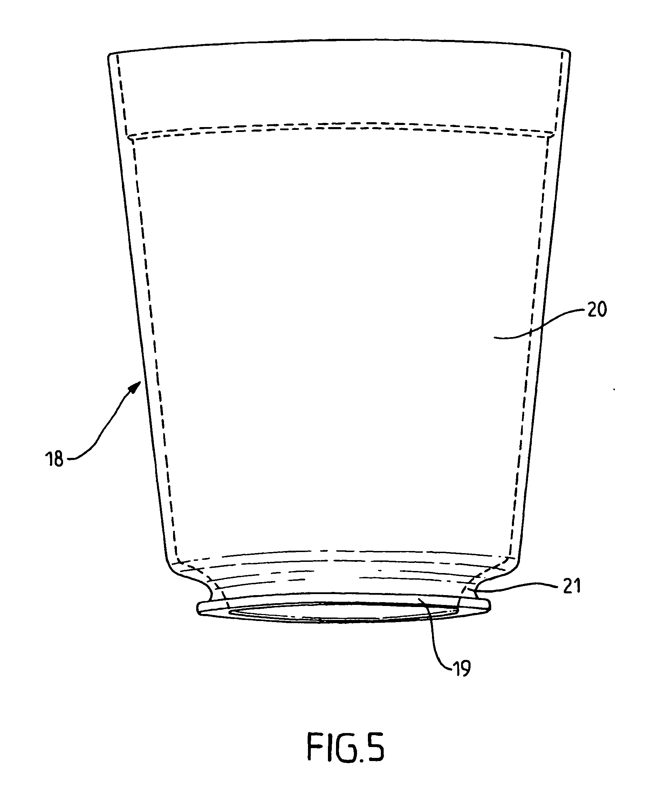

Sur la Figure 5, on observe un bol (18) possèdant en son extrémité inférieure un anneau circulaire (19), qui communique avec une enveloppe (20) au moyen d'une rainure (21) dont le diamètre est inférieur à cet anneau circulaire (19).

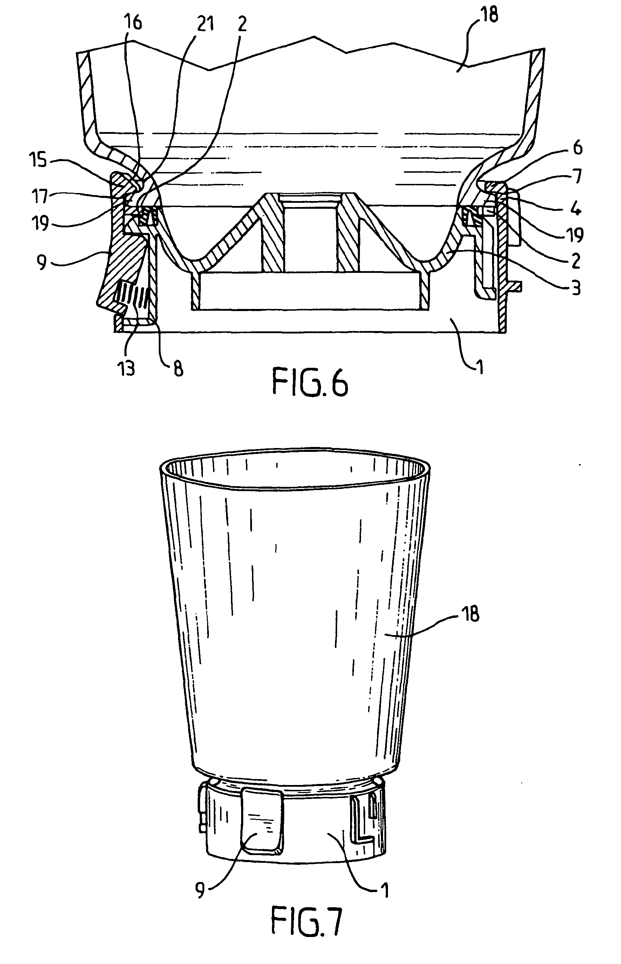

Sur la Figure 6, on observe que le bol (18) est accouplé à la base (1) du moteur à travers son anneau circulaire (19), dont le diamètre est plus petit que le diamètre de la paroi (4) de la base (1).

L'anneau circulaire (19) du bol (18) est inséré à l'intérieur du siège (7), sous la languette de connexion(6) et, en position diamétralement opposée, le bol (18) exerce une pression sur la face supérieure (16) inclinée du bouton (9), jusqu'à ce qu'il s'insère sous le coin.

La pression exercée sur la face supérieure (16) inclinée étire le ressort (13) et fait pivoter le bouton (9) autour de son axe (11), afin de libérer le passage de l'anneau circulaire (19) par la protubérance (15), logeant ledit anneau circulaire (19) dans le siège (7), sur le logement (2).

Lors de l'accouplement du bol (18) sur la base (1), le ressort (13) agit sur le bouton (9), faisant revenir la protubérance (15) sur sa position originale pour qu'elle appuie sur l'anneau circulaire (19) en bloquant le bol (18) sur sa base (1).

Le diamètre extérieur de la rainure (21) est inférieur au diamètre formé entre la protubérance (15) et la languette (6), permettant la fixation du bol (18) sur la base (1).

La Figure 7 montre une vue en perspective du bol (18) accouplé et bloqué sur la base (1) du bol, selon l'invention.

Pour désaccoupler le bol (18) de la base (1), on appuie sur le bouton (9), qui pivote autour de son axe (11), et on retire ainsi la protubérance (15) au-dessus de l'anneau circulaire (19) du bol (18) et, par conséquent, le bol (18) peut être retiré.

## Revendications

1. Dispositif d'accouplement d'un bol (18) et d'une base (1) d'un récipient d'appareil mixeur, **caractérisé en ce que** le bol (18) possède une extrémité inférieure comprenant un anneau circulaire (19) surmonté d'une rainure (21) dont le diamètre est plus petit que celui de l'anneau circulaire (19) et **en ce que** la base (1) comporte une paroi cylindrique (4) dans laquelle vient s'engager l'anneau circulaire (19) et un bouton (9) comprenant une protubérance (15) de blocage, ledit bouton (9) étant mobile entre une position de repos, vers laquelle il est ramené par un ressort (13), dans laquelle la protubérance (15) vient s'engager dans la rainure (21) du bol (18) lorsque le bol est accouplé à la base (1) et une position enfoncée dans laquelle la protubérance (15) est écartée de la rainure (21) pour permettre le désaccouplement du bol (18).

2. Dispositif d'accouplement un bol (18) et d'une base (1) selon la revendication 1, **caractérisé en ce** ledit bouton (9) est monté pivotant autour d'un axe (11) fixé sur la base (1) du bol (18).

3. Dispositif d'accouplement d'un bol (18) et d'une base (1) selon l'une quelconque des revendications 1 à 2, **caractérisé en ce que** ladite paroi cylindrique (4) se projette verticalement à partir d'un logement (2) qui reçoit un support de lames (3).

4. Dispositif d'accouplement d'un bol (18) et d'une base (1) selon la revendication 3, **caractérisé en ce que** la paroi cylindrique (4) supporte une languette de connexion (6) se projetant horizontalement à l'opposé du bouton (9) et configurant un siège (7) entre le logement (2) et la languette de connexion (6).

5. Dispositif d'accouplement d'un bol (18) et d'une base (1) selon la revendication 4, **caractérisé en ce que** la protubérance (15) possède un profil trapézoidal présentant une face supérieure (16) inclinée et une face inférieure (17) disposée à la même hauteur que la languette de connexion (6) diamétralement opposée.

6. Dispositif d'accouplement d'un bol (18) et d'une base (1) selon l'une quelconque des revendications 4 à 5, **caractérisé en ce que** le diamètre extérieur de la rainure (21) est inférieur au diamètre formé entre la protubérance (15) et la languette de connexion (6).

7. Dispositif d'accouplement d'un bol (18) et d'une base (1) selon l'une quelconque des revendications 3 à 6, **caractérisé en ce que** ledit support de lames (3) comporte une cavité (8) à l'intérieur de laquelle vient se loger le bouton (9), la cavité (8) possédant deux sièges (10) sur lesquels vient reposer et pivoter un axe (11) du bouton (9).

8. Dispositif d'accouplement d'un bol (18) et d'une base (1) selon la revendication 7, **caractérisé en ce que** le bouton (9) possède dans sa partie inférieure un trou rond (12) qui reçoit ledit ressort (13).

## Claims

1. A device for coupling a bowl (18) and a base (1) of a mixer container, **characterised in that** the bowl (18) has a lower end comprising a circular ring (19) surmounted by a groove (21) whose diameter is smaller than that of the circular ring (19) and **in that** the base (1) comprises a cylindrical wall (4) into which the circular ring (19) is engaged and a button (9) comprising a locking (15) projection, said button (9) being mobile between a rest position, to which it is returned by a spring (13) and in which the projection (15) is engaged in the groove (21) of the bowl (18) when the bowl is coupled to the base (1) and a depressed position in which the projection (15) is spaced apart from the groove (21) to allow the uncoupling of the bowl (18).

2. A device for coupling a bowl (18) and a base (1) according to claim 1, **characterised in that** said button (9) is pivotally mounted around a shaft (11) attached to the base (1) of the bowl (18).

3. A device for coupling a bowl (18) and a base (1) according to any one of claims 1 to 2, **characterised in that** said cylindrical wall (4) projects vertically from a housing (2) which receives a blade holder (3).

4. A device for coupling a bowl (18) and a base (1) according to claim 3, **characterised in that** the cylindrical wall (4) supports a connecting tab (6) projecting horizontally opposite the button (9) and defining a seat (7) between the housing (2) and the connecting tab (6).

5. A device for coupling a bowl (18) and a base (1) according to claim 4, **characterised in that** the projection (15) has a trapezoidal profile having an inclined upper face (16) and a lower face (17) arranged at the same height as the diametrically opposite connecting tab (6).

6. A device for coupling a bowl (18) and a base (1) according to any one of claims 4 to 5, **characterised in that** the outer diameter of the groove (21) is smaller than the diameter formed between the projection (15) and the connecting tab (6).

7. A device for coupling a bowl (18) and a base (1) according to any one of claims 3 to 6, **characterised in that** said blade holder (3) comprises a cavity (8) inside which the button (9) is housed, the cavity (8) having two seats (10) on which a shaft (11) of the button (9) rests and swivels.

8. A device for coupling a bowl (18) and a base (1) according to claim 7, **characterised in that** the button (9) has in its lower portion a round hole (12) which receives said spring (13).

## Patentansprüche

1. Vorrichtung zum Verkoppeln eines Behälters (18) mit einem Sockel (1) eines Gefäßes eines Mixgerätes, **dadurch gekennzeichnet, dass** der Behälter (18) ein unteres Ende aufweist, das einen kreisförmigen Ring (19) umfasst, über dem sich eine Rille (21) befindet, deren Durchmesser kleiner ist als jener des kreisförmigen Ringes (19), und **dadurch**, dass der Sockel (1) eine zylindrische Wand (4), in die der kreisförmige Ring (19) eingesetzt wird, und eine Taste (9) umfasst, die einen Verriegelungsvorsprung (15) umfasst, wobei die Taste (9) zwischen einer Ruheposition, in die sie von einer Feder (13) gebracht wird und in der der Vorsprung (15) in die Rille (21) des Behälters (18) eingreift, wenn der Behälter mit dem Sockel (1) verkoppelt ist, und einer gedrückten Position beweglich ist, in der der Vorsprung (15) von der Rille (21) beabstandet ist, um die Entkopplung des Behälters (18) zu ermöglichen.

2. Vorrichtung zum Verkoppeln eines Behälters (18) mit einem Sockel (1) nach Anspruch 1, **dadurch gekennzeichnet, dass** die Taste (9) schwenkbar um eine Achse (11) angebracht ist, die am Sockel (1) des Behälters (18) fixiert ist.

3. Vorrichtung zum Verkoppeln eines Behälters (18) mit einem Sockel (1) nach einem der Ansprüche 1 bis 2, **dadurch gekennzeichnet, dass** die zylindrische Wand (4) ausgehend von einer Aufnahme (2), die einen Klingenträger (3) aufnimmt, vertikal emporragt.

4. Vorrichtung zum Verkoppeln eines Behälters (18) mit einem Sockel (1) nach Anspruch 3, **dadurch gekennzeichnet, dass** die zylindrische Wand (4) eine Verbindungslasche (6) trägt, die gegenüber der Taste (9) horizontal vorragt und einen Sitz (7) zwischen der Aufnahme (2) und der Verbindungslasche (6) ausbildet.

5. Vorrichtung zum Verkoppeln eines Behälters (18) mit einem Sockel (1) nach Anspruch 4, **dadurch gekennzeichnet, dass** der Vorsprung (15) ein trapezförmiges Profil aufweist, das eine geneigte Oberseite (16) und eine Unterseite (17) umfasst, die auf gleicher Höhe wie die Verbindungslasche (6) angeordnet ist, die sich diametral gegenüberliegend befindet.

6. Vorrichtung zum Verkoppeln eines Behälters (18) mit einem Sockel (1) nach einem der Ansprüche 4 bis 5, **dadurch gekennzeichnet, dass** der Außendurchmesser der Rille (21) kleiner ist als der Durchmesser, der zwischen dem Vorsprung (15) und der Verbindungslasche (6) gebildet wird.

7. Vorrichtung zum Verkoppeln eines Behälters (18) mit einem Sockel (1) nach einem der Ansprüche 3 bis 6, **dadurch gekennzeichnet, dass** der Klingenträger (3) einen Hohlraum (8) umfasst, in dem die Taste (9) untergebracht ist, wobei der Hohlraum (8) zwei Sitze (10) aufweist, auf denen eine Achse (11) der Taste (9) aufliegt und schwenkt.

8. Vorrichtung zum Verkoppeln eines Behälters (18) mit einem Sockel (1) nach Anspruch 7, **dadurch gekennzeichnet, dass** die Taste (9) in ihrem unteren Teil ein rundes Loch (12) aufweist, das die Feder (13) aufnimmt.
